Europäisches Patentamt

European Patent Office

Office européen des brevets

(11) Numéro de publication: **0 365 734**
**A1**

# (12) DEMANDE DE BREVET EUROPEEN

(21) Numéro de dépôt: 88810681.2

(22) Date de dépôt: 03.10.88

(51) Int. Cl.⁵: **B60N 2/00** , **A47C 7/34**

(43) Date de publication de la demande:
02.05.90 Bulletin 90/18

(84) Etats contractants désignés:
AT BE CH DE ES FR GB GR IT LI LU NL SE

(71) Demandeur: **LUIGI FORTUNA & C. S.N.C.**
**Corso delle Province, 36**
**I-95100 Catania(IT)**

(72) Inventeur: **Quayzin, Sylvia**
**12, rue Crespin**
**CH-1206 Genève(CH)**

(74) Mandataire: **Meylan, Robert Maurice et al**
**c/o BUGNION S.A. 10, route de Florissant**
**Case Postale 375**
**CH-1211 Genève 12 - Champel(CH)**

(54) **Siège de véhicule.**

(57) Le siège est muni de ressorts (3) associés à des moyens de freinage unidirectionnel freinant les ressorts dans le sens de la décompression. Ces moyens de freinage sont constitués par exemple d'une rondelle de friction (25) montée entre un écrou de pression (23) et une rondelle (26) montés sur un arbre (15), le dispositif de friction étant associé au ressort par un bras (9).

FIG. 3

## Siège de véhicule.

La présente invention a pour objet un siège de véhicule muni de ressorts travaillant verticalement en compression.

Le brevet EP 0 131 334 décrit un siège de véhicule dont la partie d'appui du dossier est mobile verticalement de manière à supprimer l'effort de compression sur la colonne vertébrale dû à la réaction du dos à la force de frottement sur le dossier lorsque le conducteur ou le passager est entraîné dans un mouvement ascendant par les ressorts du siège, qui sont d'autre par nécessaires pour amortir les chocs dus aux inégalités de la chaussée et pour assurer le confort des occupants du véhicule. Le ressort et la personne assise constituent un système oscillant. Dans les sièges de véhicule conventionnel, cette oscillation est principalement amortie par le frottement du dos de l'occupant contre le dossier du siège. Si, par contre, le dossier est libre de se déplacer au moins vers le haut, l'oscillation n'est pas amortie.

Dans le cas d'un siège conventionnel à dossier fixe, la tendance du système oscillant à osciller est également dévaforable, car le déplacement rapide de la personne assise vers le haut entraîne une compression relativement élevée de la colonne vertébrale, due à la réaction du frottement du dos sur le dossier.

La présente invention a pour but d'amortir les oscillations dans le siège lui-même, sans pour autant réduire le confort du siège.

Le siège de véhicule selon l'invention est caractérisé par le fait que ses ressorts sont munis de moyens de freinage unidirectionnel freinant les ressorts dans le sens de la décompression.

En compression, les ressorts travaillent librement, de telle sorte que l'élasticité du siège n'est pas réduite. Par contre, lors du relâchement de la pression sur les ressorts, ceux-ci sont freinés dans leur détente, de telle sorte que toute oscillation est supprimée.

Le freinage unidirectionnel des ressorts peut s'effectuer de différentes manières qui sont définies dans les revendications dépendantes.

Le dessin annexé représente, à titre d'exemple, trois formes d'exécution de l'invention.

La figure 1 est une vue en perspective et en transparence d'un siège de véhicule équipé de ressorts amortis selon une première forme d'exécution.

La figure 2 est une vue en coupe axiale de l'arbre portant les bras agissant sur les ressorts selon la première forme d'exécution.

La figure 3 est une vue éclatée d'une partie de cet arbre.

La figure 4 représente, en perspective, un ressort amorti unidirectionnellement selon une deuxième forme d'exécution.

La figure 5 est une vue, en perspective, d'une variante d'exécution du ressort amorti représenté à la figure 4.

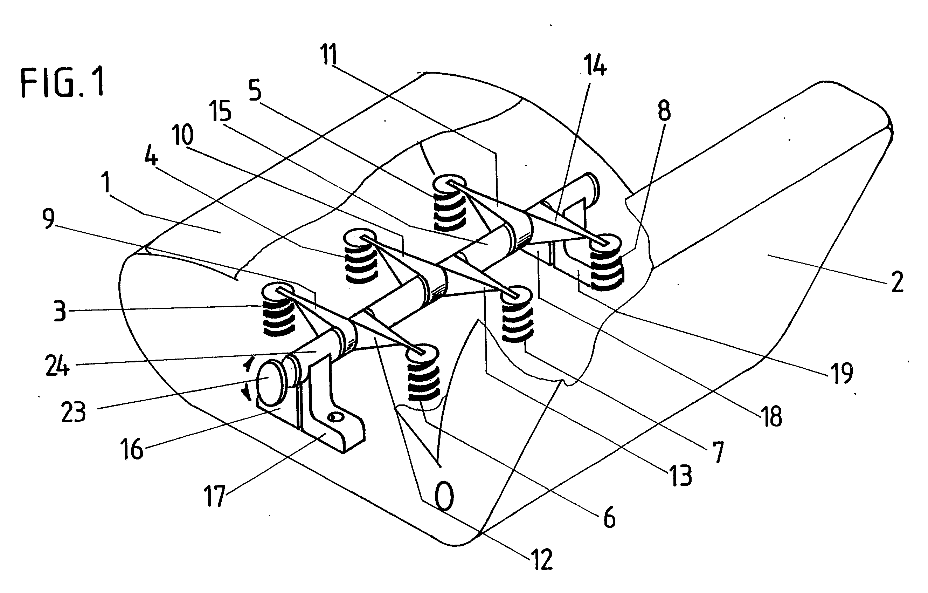

La figure 1 représente un siège 1 muni d'un dossier 2 conventionnel ou réalisé selon le brevet EP 0 131 334. Ce siège est muni de six ressorts 3 à 8 dont l'extrémité inférieure s'appuie sur une plaque ou des barres rigides non représentées. Sur ces ressorts s'appuie respectivement l'extrémité de bras 9 à 14 articulés sur un arbre commun 15. Cet arbre 15 porte en outre des moyens de freinage unidirectionnel freinant la remontée des bras 9 à 14.

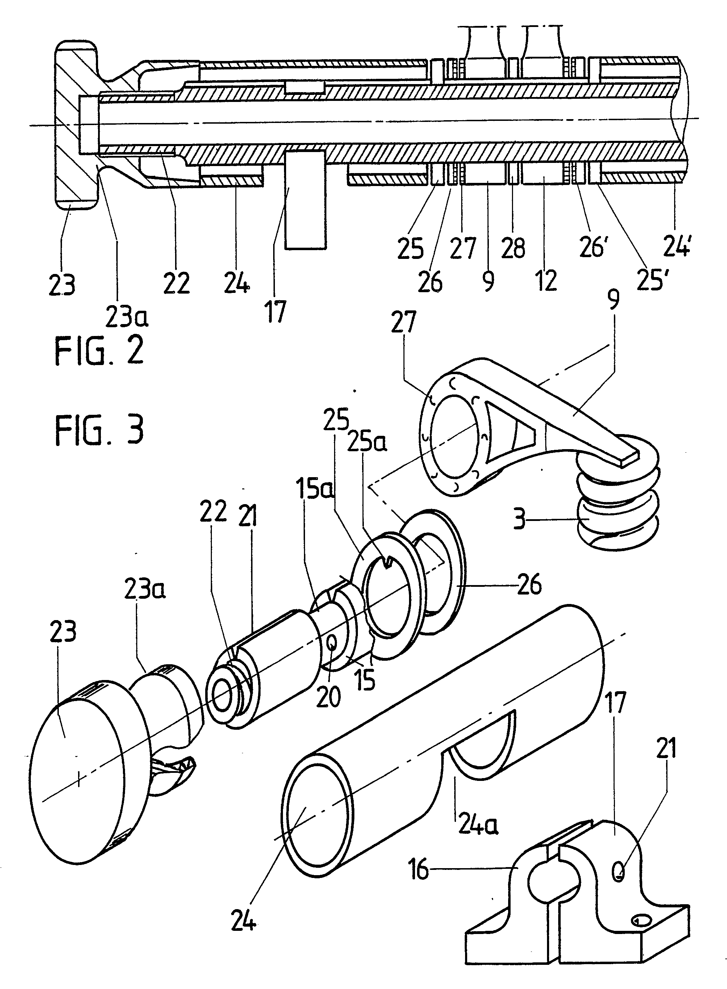

Les moyens de freinage unidirectionnel sont représentés en détail aux figures 2 et 3. L'arbre 15 présente deux rétrécissements dont l'un, 15a, est représenté aux figures 2 et 3, pour la fixation de l'arbre dans deux supports en forme de paliers constitués de deux parties 16 et 17, respectivement 18 et 19. L'arbre 15 et la partie 17 du support sont munis d'un trou 20, respectivement 21, permettant le blocage de l'arbre 15 en rotation. L'arbre 15 présente en outre une rainure longitudinale 21. Les bras oscillants 9 à 14 sont enfilés sur l'arbre 15. L'une des extrémités de l'arbre 15 présente un bout fileté 22 sur lequel vient se visser un bouton 23 muni d'une collerette 23a qui vient en contact avec une douille 24 formant entretoise montée librement sur l'arbre 15 et munie d'une ouverture 24a pour le passage des supports 16 et 17. Entre le premier bras oscillant 9 et l'autre extrémité de la douille 24 sont montées une rondelle 26 et une rondelle de friction 25 munie d'un ergot radial 25a s'engageant dans la rainure 21 de l'arbre pour l'empêcher de tourner. La face de la rondelle 26 dirigée du côté du bras 9 est pourvue de dents ou d'encoches coopérant avec les lames flexibles 27 d'une rondelle solidaire du flanc du bras 9 pour constituer un accouplement unidirectionnel en rotation du bras 9 et de la rondelle 26. Entre le bras 9 et le bras voisin 12 est disposée une rondelle lisse 28. De l'autre côté du bras 12 retrouve une rondelle dentée 26', une rondelle de friction 25' et une douille 24' analogues aux pièces 24, 25 et 26 décrites. Cette construction se répète pour chacune des paires de bras oscillants 10/13 et 11/14.

L'arbre 15 pourrait bien entendu porter d'avantage de paires de bras oscillants et le siège pourrait comporter plusieurs arbres munis de bras oscillants agissant chacun sur un ressort.

On voit immédiatement que le bouton 23 permet de régler la pression sur la rondelle de friction 25, c'est-à-dire la force de freinage. Lorsque les bras 9 à 14 descendent, les lames 27 sautent sur les encoches de la rondelle 26. Par contre, lorsque les bras remontent, ils sont solidarisés de leur rondelle 26.

En variante, il est possible d'utiliser un dispositif d'entraînement unidirectionnel radial. De tels dispositifs sont bien connus et existent sous diverses formes. On citera, pour exemple, les dispositifs à cliquet, les dispositifs à ressort hélicoïdal enserrant un cylindre dans un sens de rotation par le reserrement de ses spires et libérant ce cylindre dans l'autre sens, les dispositifs à billes et à rouleaux comprenant une cage rotative munie de rampes, de telle sorte que les billes, respectivement les rouleaux, solidarisent les deux pièces à solidariser dans un sens de rotation seulement par coincement des billes respectivement des, rouleaux ou des aiguilles. Dans ce cas, l'élément de friction peut être constitué par un manchon entourant l'élément extérieur de l'accouplement unidirectionnel on situé à l'intérieur de l'autre élément de cet accouplement unidirectionnel. Un tel frein est décrit, par exemple, dans le brevet FR 2 546 225.

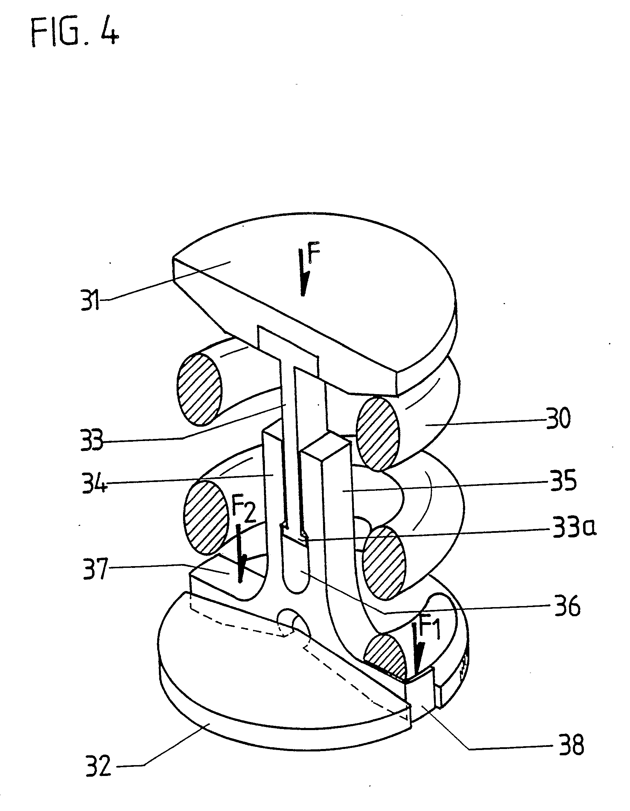

La figure 4 représente une autre forme d'exécution d'un ressort amorti unidirectionnellement. Le ressort 30 est monté entre deux flasques 31 et 32 de préférence en matière synthétique. Le flasque 31 est muni d'une tige verticale 33 de section rectangulaire, en matériau de friction, présentant un arrêt en forme d'élargissement 33a à son extrémité. Le flasque 32 présente un socle vertical fendu verticalement de manière à former deux bras 34 et 35 qui sont appuyés l'un contre l'autre en l'absence de la tige 33 pincée entre ces deux bras. L'élargissement 33a de la tige 33 prend place dans un dégagement 36 dans la partie inférieure de la fente. Les bras 34 et 35 se prolongent dans l'épaisseur du flasque 32 selon deux bras sensiblement horizontaux 37 et 38 formant une surépaisseur dans le flasque 32. Le ressort 30 s'appuie sur ces bras 37 et 38.

Lorsqu'une force F est exercée sur le flasque supérieur 31, le ressort 30 est comprimé et deux forces f1, f2 sont exercées par le ressort sur les extrémités des bras 37 et 38, ce qui a pour effet d'ouvrir la pince formée par les bras verticaux 34 et 35, de telle sorte que la tige 33 peut descendre librement. Par contre, lorsque la pression F cesse, le ressort est en relaxation et les forces f1, f2 s'annulent, de telle sorte que la pince 34/35 se referme sur la tige 33, celle-ci étant freinée. La course vers le haut de la tige 33 est limitée par son arrêt 33a, sans lequel le flasque 31 s'échapperait du dispositif.

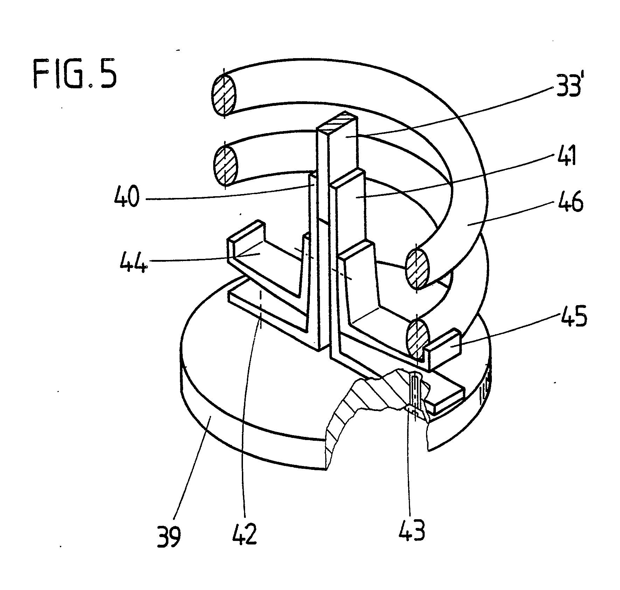

La figure 5 représente partiellement une variante d'exécution de la figure 4. Cette exécution comprend également un flasque inférieur 39 et un flasque supérieur non représenté, analogue au flasque 31 de la figure 4, et muni d'une tige analogue 33'. La pince est ici constituée de deux équerres en acier 40 et 41 fixées sur le flasque 39 par des vis 42 et 43. Sur les bras verticaux des équerres 40 et 41, à une faible distance du flasque 39, sont soudées deux équerres 44 et 45 d'étendant latéralement de chaque côté des équerres 40 et 41. Sur ces équerres 44 et 45 s'appuie un ressort 46 analogue au ressort 30. Les équerres 44 et 45 ne sont pas à la même hauteur de telle sorte que la spire inférieure du ressort 46 s'appuie, au repos, sur les deux équerres, de manière à éviter une torsion du dispositif. Les vis 41 et 43 permettent de régler la force de pincement de la pince et par conséquent la force de freinage. Lorsque le ressort 46 est comprimé, la pression sur les bras horizontaux des équerres 44 et 45 écarte élastiquement les bras verticaux des équerres 40 et 41, ce qui permet à la tige 33' de descendre librement. Lorsque la pression sur le flasque supérieur disparaît, les équerres 40 et 41 referment et freinent la tige 33'. Les équerres 44 et 45 pourraient être fixées comme des consoles.

## Revendications

1. Siège de véhicule muni de ressorts (3 à 8; 30; 50) travaillant verticalement en compression, caractérisé par le fait que lesdits ressorts sont munis de moyens de freinage unidirectionnel (25, 26, 27; 33, 34, 35; 33', 44, 47) freinant les ressorts dans le sens de la décompression.

2. Siège de véhicule selon la revendication 1, caractérisé par le fait qu'il comprend au moins un axe horizontal (15) sur lequel sont articulés des bras (9 à 14) respectivement en appui sur chacun des ressorts, chacun de ces bras étant associé à des moyens de friction à action unidirectionnelle (25 à 27).

3. Siège de véhicule selon la revendication 2, caractérisé par le fait que les moyens de friction unidirectionnelle sont constitués par au moins une rondelle de friction (25) montée entre un écrou de pression (23) et une rondelle (26) dont l'autre face est munie de dents ou d'encoches coopérant avec une des lames flexibles (27) solidaires du moyeu du levier correspondant.

4. Siège de véhicule selon la revendication 1, caractérisé par le fait que les ressorts (30; 50) sont montés entre deux flasques (31, 32) dont l'un est solidaire d'une tige axiale de guidage (33) et l'autre comporte une pince verticale (34, 35; 44, 47) dans laquelle est pincée ladite tige, les deux doigts de la pince étant respectivement solidaires de deux bras (37, 38; 45, 48) sensiblement perpendiculaires à l'axe du ressort et sur lesquels s'appuie le ressort, de telle manière que la compression du ressort a pour effet d'ouvrir la pince, celle-ci se refermant lors de la relaxation du ressort.

5. Siège de véhicule selon la revendication 4, caractérisé par le fait que la pince et ses deux bras sont venus d'une seule pièce en matière synthétique (34, 35, 37, 38).

6. Siège de véhicule selon la revendication 4, caractérisé par le fait que la pince est constituée de deux pièces (40, 41) coudées à angle droit, fixées sur le flasque (39) et de deux équerres (44, 45) fixées sur les bras verticaux desdites pièces coudées (40, 41) et sur lesquelles s'appuie le ressort (46).

FIG.1

EP 0 365 734 A1

FIG. 2

FIG. 3

# FIG. 4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C- 871 676 (HEMSCHEIDT)<br>* Page 2, lignes 87-107; figures * | 1 | B 60 N  2/00<br>A 47 C  7/34 |
| A | CH-A- 345 544 (BREMSHEY)<br>* Page 2, ligne 3 - page 3, ligne 5; figures * | 1 | |
| A | GB-A- 255 808 (ERCOLI)<br>* Page 2, lignes 32-54; figures * | 1,3 | |

**DOMAINES TECHNIQUES RECHERCHES (Int. Cl.5)**

A 47 C
B 60 N  2/00
B 64 D
F 16 F  7/00

Le présent rapport a été établi pour toutes les revendications

| Lieu de la recherche | Date d'achèvement de la recherche | Examinateur |
|---|---|---|
| LA HAYE | 09-06-1989 | HORVATH R.C. |